# EUROPÄISCHE PATENTANMELDUNG

(11) **EP 4 477 360 A1**
(43) Veröffentlichungstag der Anmeldung: **18.12.2024**
(21) Anmeldenummer: 24181371.6
(22) Anmeldetag: 11.06.2024
(51) Int. Cl.: B25B 5/14, B25B 9/00

(54) **VORRICHTUNG ZUR AUFNAHME UND ZUM FESTHALTEN FLÄCHIGER MATERIALIEN**

(30) Priorität: 13.06.2023 CH 6312023
(71) Anmelder: Hartmann, Michel, 6332 Hagendorn (CH)
(72) Erfinder: Hartmann, Michel, 6332 Hagendorn (CH)
(74) Vertreter: Zander, Ellen Vilja

(57) **Zusammenfassung**

Die Erfindung geht aus von einer Vorrichtung (50) zur Aufnahme und zum selbsthemmenden Festhalten von flächigen Materialien (2), wie Blech, Gewebe, Karton, Papier oder Kunststofffolie.

Um eine gattungsgemässe Vorrichtung mit verbesserten Eigenschaften hinsichtlich eines Bedienkomforts und einer Konstruktion bereitzustellen, wird vorgeschlagen, dass die Vorrichtung (50) einen Grundkörper (1) mit mindestens einem integrierten Klemmmechanismus (4,13), welcher aus einer zur Längsachse des Grundkörpers (1) winklig eingelassenen Führungsbahn (6,10) mit jeweils einer darin geführten Kugel (7,12) besteht, welche durch mindestens ein federndes Element (8) zwischen der Führungsbahn (6,10) und einem Gegenstück vorgespannt ist. Das flächige Material (2) muss hierbei lediglich in die Vorrichtung (50) eingeführt werden und ist danach gegen ein Herausziehen entgegen der Einführrichtung selbsthemmend festgehalten.

## Beschreibung

### Stand der Technik

Die Erfindung betrifft eine Vorrichtung zur Aufnahme und zum selbsthemmenden Festhalten von flächigen Materialien, wie Blech, Gewebe, Karton, Papier oder Kunststofffolie, nach dem Oberbegriff des Anspruchs 1 sowie ein System nach Anspruch 12 mit zumindest einer derartigen Vorrichtung und einer Griffeinheit.

Bei der Handhabung von flächigen Materialien werden vielfach Vorrichtungen benötigt, mit welchen die entsprechenden Materialien aufgenommen und festgehalten werden können. Dabei ist es für gewisse Anwendungen vorteilhaft und einfacher, wenn die Vorrichtung dazu nicht aktiv betätigt, respektive geöffnet oder geschlossen werden muss.

Die bisher bekannten Vorrichtungen zum Aufnehmen und Festhalten von flächigen Materialien sind entweder über eine Betätigung aktiv zu öffnen respektive zu schliessen, oder die Materialien können durch Einführen in eine elastisch vorgespannte Klammer aufgenommen und festgehalten werden. Je nach Anwendung dieser Vorrichtungen ist eine aktive Öffnungs- respektive Schliessbetätigung jedoch nicht benutzerfreundlich oder nicht erwünscht. Die notwendigen Mechanismen zum Öffnen respektive Schliessen derartiger Vorrichtungen erfordern eine komplexe und aufwändige Konstruktion. Ein Beispiel einer aktiv zu betätigenden Vorrichtung zur Aufnahme und zum Festhalten von flächigem Material ist in dem Dokument ES 1002209 U gezeigt. Bei dieser Vorrichtung erfolgt das Öffnen respektive das Schliessen über einen Betätigungsgriff mit gekoppeltem Klemmmechanismus, wobei in diesem Fall ein Bediener die Vorrichtung mit Muskelkraft betätigen muss. Es sind Vorrichtungen bekannt, welche flächige Materialien durch alleiniges Einführen in die Vorrichtung über einen Klemmmechanismus festhalten können. Jedoch können diese Haltefunktionen nicht in allen räumlichen Lagen der Vorrichtung gewährleistet und somit das flächige Material auch nicht in allen räumlichen Lagen der Vorrichtung über den Klemmmechanismus festgehalten werden. Ein Beispiel hierfür ist in EP 3430601 A1 beschrieben, der bewegliche Haltemechanismus dieser Vorrichtung, mit einem als Klemmriegel bezeichneten Hebel, wird durch ein Umdrehen der Vorrichtung durch das Einwirken von Schwerkraft auf den Klemmriegel geöffnet respektive gelöst. Das Umdrehen der Vorrichtung entspricht in diesem Falle der aktiven Öffnungsbetätigung. Vorrichtungen, welche elastisch durch das Einführen eines flächigen Materials aufgedrückt werden müssen, um das Material aufzunehmen und danach festzuhalten, können nur so stark vorgespannt sein, dass das flächige Material beim Einführen nicht gestaucht wird, wobei der Nachteil entsteht, dass die Haltekraft derartiger Vorrichtungen beschränkt ist. Hierzu gehört jegliche Art von elastischen Klammern. Ein Beispiel dazu ist in DE102015114962A1 beschrieben.

Die Aufgabe der Erfindung besteht insbesondere darin, eine gattungsgemässe Vorrichtung mit verbesserten Eigenschaften hinsichtlich eines Bedienkomforts und einer Konstruktion bereitzustellen. Die Aufgabe wird erfindungsgemäss durch die Merkmale der Ansprüche 1 und 12 gelöst, während vorteilhafte Ausgestaltungen und Weiterbildungen der Erfindung den Unteransprüchen entnommen werden können.

### Vorteile der Erfindung

Die Erfindung geht aus von einer Vorrichtung zur Aufnahme und zum selbsthemmenden Festhalten von flächigen Materialien, wie Blech, Gewebe, Karton, Papier oder Kunststofffolie.

Es wird vorgeschlagen, dass die Vorrichtung einen Grundkörper mit mindestens einem integrierten Klemmmechanismus aufweist, welcher aus einer zur Längsachse des Grundkörpers winklig eingelassenen Führungsbahn mit jeweils einer darin geführten Kugel besteht, welche durch mindestens ein federndes Element zwischen der Führungsbahn und einem Gegenstück vorgespannt ist.

Durch eine derartige Ausgestaltung kann vorteilhaft ein Bedienkomfort gesteigert und eine Handhabung für einen Bediener erleichtert werden. Zudem kann eine Konstruktion verbessert, und zwar vereinfacht und handhabungsfreundlicher gestaltet werden. Insbesondere kann die Vorrichtung flächige Materialien durch alleiniges Einführen in Einführrichtung aufnehmen und festhalten, sodass das jeweilige flächige Material in eingestecktem Zustand gegen ein Herausfallen und/oder Herausziehen entgegen der Einführrichtung selbsthemmend in der Vorrichtung festgehalten und fixiert ist. Insbesondere erfolgt das Einführen des Materials in die Vorrichtung ohne aktive Betätigung von Klemmelementen oder dergleichen durch einen Bediener, sodass eine besonders bedienerfreundliche Vorrichtung bereitgestellt werden kann, deren Konstruktion ein besonders schnelles, einfaches und unkompliziertes Aufnehmen des Materials ermöglicht. Ferner kann mit der vorliegenden Erfindung eine Vorrichtung bereitgestellt werden, bei der das festzuhaltende flächige Material durch das Einführen in die Vorrichtung nicht oder nur minimal gestaucht wird und ein Einknicken und/oder Verbiegen und/oder Verknicken und/oder Einreissen oder andere Beschädigungen reduziert, vorzugsweise verhindert, werden können. Darüber hinaus können notwendige Kräfte für das Einführen des flächigen Materials in die Vorrichtung möglichst gering gehalten und damit der Bedienkomfort wiederum gesteigert werden. Dies gilt insbesondere für flächige Materialien aus sehr flexiblen Werkstoffen, wie beispielsweise Papier oder Kunststofffolie. Zudem kann mit der vorliegenden Erfindung eine Vorrichtung bereitgestellt werden, welche ungeachtet ihrer räumlichen Lage und/oder Ausrichtung im Raum funktioniert, sodass damit ein stabiles und selbsthemmendes Festhalten des jeweiligen flächigen Materials in allen räumlichen Lagen gewährleistet werden kann. Ausserdem kann ein besonders leichtes und schnelles Herauslösen bzw. Entnahme des Materials aus der Vorrichtung ermöglicht werden. Der Bedienkomfort kann insbesondere dahingehend gesteigert werden, dass die Entnahme des flächigen Materials mit einem sehr geringen Kraftaufwand des Bedieners funktioniert, und zwar durch ein seitliches Herausziehen des Materials aus der Vorrichtung senkrecht zur Einführrichtung. Damit kann auf zusätzliche Öffnungs-, Freigabe- und/oder Klemmmechanismen verzichtet und eine kompakte, einfache und bedienerfreundliche Konstruktion bereitgestellt werden. Dadurch kann zudem eine Effizienz, hinsichtlich zumindest einer Kosten-, Material-, Konstruktions-, Herstellungs- und/oder Produktionseffizienz, gesteigert werden.

Insbesondere ist die Vorrichtung dazu ausgebildet, das flächige Material im eingesteckten Zustand zu fixieren/festzuhalten und vor einem Verrutschen, Verdrehen und/oder Herausfallen zu sichern. Erst durch aktives Herausziehen des flächigen Materials, kann die Vorrichtung das Material wieder freigeben. Bevorzugt ist das flächige Material in Einführrichtung, welche parallel zur Längsachse des Grundkörpers verläuft, in die Vorrichtung einführbar. Die Vorrichtung kann das flächige Material in dem eingesteckten Zustand vor einem Herausrutschen und/oder Herausfallen entgegen der Einführrichtung selbsthemmend fixieren/festhalten. Möglicherweise wäre denkbar, dass ein Herauslösen bzw. eine Entnahme des flächigen Materials aus der Vorrichtung entgegen der Einführung erfolgen kann. Um eine besonders kompakte und bedienerfreundliche Konstruktion bereitzustellen und auf zusätzliche Öffnungs- und/oder Freigabemechanismen, welche zur Entnahme des flächigen Materials betätigt werden müssten, verzichten zu können, wird vorgeschlagen, dass das flächige Material zu einer Entnahme aus der Vorrichtung entlang einer Entnahmerichtung, welche senkrecht zu der Einführrichtung, insbesondere senkrecht zur Längsachse des Grundkörpers, verläuft, aus der Vorrichtung entnehmbar ist. Insbesondere erfolgt die Entnahme des flächigen Materials durch ein seitliches Herausziehen des Materials aus der Vorrichtung, und zwar senkrecht zur Einführrichtung. Unter «senkrecht» soll vorliegend unter einem Winkel zwischen 85° und 95°, vorzugsweise zwischen 88° und 92° und besonders vorzugsweise von 90° verstanden werden. Durch eine seitliche Rollbewegung der Kugel in der Führungsbahn kann der selbsthemmende Effekt und die Klemmung der Vorrichtung gelöst und das flächige Material freigegeben werden. Dadurch kann gewährleistet werden, dass das flächige Material mit geringem Kraftaufwand und beschädigungsfrei aus der Vorrichtung entnommen werden kann.

Unter der «Längsachse» eines Objekts, insbesondere des Grundkörpers, soll in diesem Zusammenhang eine Achse verstanden werden, welche parallel zu einer längsten Kante eines kleinsten geometrischen Quaders ausgerichtet ist, welcher das Objekt gerade noch vollständig umschliesst. Der Grundkörper kann zumindest zu einem Grossteil oder vollständig aus einem Kunststoff, beispielsweise Polypropylen, einem Metall, einem Mineral, einem nachwachsenden Rohstoff, insbesondere organischen, bevorzugt pflanzlichen, Rohstoff, und/oder einem Verbundmaterial bestehen. Unter dem Ausdruck «zu einem Grossteil» sollen vorliegend beispielsweise zumindest 55%, vorteilhaft zumindest 75%, vorzugsweise zumindest 85% und besonders bevorzugt höchstens 95% eines Massen- und/oder Volumenanteils verstanden werden. Der Grundkörper könnte aus zumindest zwei Körperteilen bestehen, welche insbesondere separat hergestellt, beispielsweise in einem Spritzgussverfahren und/oder in einem Stanzverfahren, und mit einer Kraft- und/oder Formschlussverbindung, beispielsweise mittels einer Rast- und/oder Steck- und/oder Dreh- und/oder Schraub- und/oder Klemmverbindung und/oder Klettverbindung, miteinander verbindbar, insbesondere verbunden, sind. Der Grundkörper kann einstückig, vorzugsweise einteilig, ausgebildet sein. Unter «einstückig» soll vorliegend zumindest stoffschlüssig verbunden verstanden werden, beispielsweise durch einen Klebe-, einen Anspritz- und/oder Schweissprozess und/oder einen anderen, dem Fachmann als sinnvoll erscheinenden Prozess. Ferner soll unter «einteilig» in einem Stück geformt verstanden werden. Vorzugsweise wird dieses eine Stück aus einem einzelnen Rohling, einer Masse und/oder einem Guss, besonders bevorzugt in einem Spritzgussverfahren und/oder in einem Stanzverfahren und/der in einem Blechbiegeprozess und/oder in einem Druckprozess, beispielsweise einem 3D-Druckprozesses, und/oder einem anderen dem Fachmann als sinnvoll erscheinenden Verfahren aus dem einzelnen Rohling hergestellt.

Bevorzugt weist der Grundkörper einen Haltebereich auf, in welchen das flächige Material einführbar und in welchem das flächige Material in dem eingesteckten Zustand selbsthemmend fixiert ist. Insbesondere ist der Haltebereich durch den Klemmmechanismus und das Gegenstück definiert. Das Gegenstück kann ein durch den Grundkörper ausgebildeter Abschnitt sein. Bevorzugt liegt die Kugel in zumindest einem Zustand, bevorzugt in einem nicht eingesteckten Zustand des flächigen Materials, an dem Gegenstück an. Insbesondere wenn das flächige Material in dem eingesteckten Zustand in der Vorrichtung aufgenommen, wirkt der Klemmmechanismus eine Kraft auf das Material aus und fixiert es selbsthemmend.

Der Klemmmechanismus weist zumindest die Kugel, zumindest das federnde Element und zumindest die Führungsbahn auf. Bevorzugt ist der Klemmmechanismus zumindest zu einem Grossteil, besonders bevorzugt vollständig, in den Grundkörper integriert. Insbesondere ist die Führungsbahn durch den Grundkörper gebildet. Vorteilhaft ist die Führungsbahn eine Aussenkontur des Grundkörpers. Die Führungsbahn kann den Haltebereich zumindest abschnittsweise begrenzen. Insbesondere befindet sich zumindest die Kugel in dem Haltebereich. Die Kugel kann sich entlang der Führungsbahn bewegen, insbesondere rollen und/oder gleiten. In Umfangsrichtung der Kugel betrachtet, könnte sich die Kugel lediglich abschnittsweise entlang der Führungsbahn eingeschränkt bewegen, sodass lediglich ein vordefiniter Segmentabschnitt der Kugel die Möglichkeit hat die Führungsbahn zu berühren. Vorzugsweise ist die Kugel in Umfangsrichtung vollständig frei drehbar in dem Haltebereich gelagert, sodass die gesamte Oberfläche durch Drehung und Rollung die Führungsbahn abschnittsweise berühren kann. Die Führungsbahn dient einer Führung der Kugel, bevorzugt in dem Haltebereich. Insbesondere kontaktiert das federnde Element mit zumindest einem Ende die Kugel. Das federnde Element könnte möglicherweise auch fest mit der Kugel verbunden sein, beispielsweise mittels einer Stoff- und/oder Formschlussverbindung. Bevorzugt kontaktieren sich die Kugel und das federnde Element unmittelbar, sind jedoch frei von einer Fixierung zueinander. Damit kann eine freie Bewegung und ein vollständiges kugelsymmetrisches Rollen der Kugel in jegliche Raumachsen gewährleistet werden.

Bei dem Einführen des flächigen Materials kann die Kugel einen Druck auf das federnde Element ausüben und diese in Einführrichtung zusammendrücken. Bevorzugt ist in dem eingesteckten Zustand des flächigen Materials das federnde Element zumindest abschnittsweise zusammengedrückt und gespannt. In dem eingesteckten Zustand kann das federnde Element eine Rückstellkraft auf die Kugel ausüben und diese auf das flächige Material drücken, um jenes zu fixieren. Vorzugsweise fixiert der Klemmmechanismus das flächige Material selbsthemmend vor einem Herausrutschen und/oder Herausfallen entgegen der Einführrichtung. In dem eingesteckten Zustand kann das federnde Element eine Kraft auf die Kugel auswirken, welche wiederum eine Druckkraft auf das flächige Material ausübt und dieses gegen das Gegenstück drückt. Vorteilhaft ist in dem eingesteckten Zustand das flächige Material zumindest zwischen der Kugel und dem Gegenstück, insbesondere in dem Haltebereich, angeordnet. Insbesondere ist die Kugel mit dem federnden Element entgegen der Einführrichtung vorgespannt, sodass die Kugel stets spielfrei in der Führungsbahn gehalten ist und durch die Rückstellkraft des federnden Elements einen Druck gegengegen der Einführrichtung ausübt.

Der durch eine der Einführrichtung entgegengesetzten Bewegung des flächigen Materials entstehende, selbsthemmende Effekt, ist vorzugsweise durch den Winkel der Führungsbahn zur Längsachse des Grundkörpers gegeben. Insbesondere sobald das eingeführte flächige Material entgegen der Einführrichtung bewegt wird, entsteht ein Selbsthemmungseffekt, wobei die Kugel durch Federkraft und durch Reibung am flächigen Material in der Führungsbahn entgegen der Einführrichtung zurückbewegt wird. Dadurch kann das flächige Material zwischen der Kugel und dem Gegenstück eingeklemmt und festgehalten werden. Durch eine seitliche Rollbewegung der Kugel in der Führungsbahn kann der selbsthemmende Effekt und die Klemmung der Vorrichtung bei Entnahme des flächigen Materials in Entnahmerichtung gelöst und das flächige Material freigegeben werden. Dadurch kann gewährleistet werden, dass das flächige Material mit geringem Kraftaufwand und beschädigungsfrei aus der Vorrichtung entnommen werden kann.

Vorteilhaft kontaktiert das federnde Element mit zumindest einem Ende, insbesondere einem der Kugel gegenüberliegenden Ende, zumindest abschnittsweise den Grundkörper und/oder die Griffeinheit. Denkbar wäre auch, dass das federnde Element mit zumindest dem einen Ende mittels einer form- und/oder stoffschlüssigen Verbindung mit dem Grundkörper und/oder der Griffeinheit verbunden ist, und zwar beispielsweise verklebt, verschweisst oder verrastet ist. Insbesondere ist das federnde Element zwischen der Kugel und dem Grundkörper und/oder die Griffeinheit angeordnet, ferner verspannt.

Das flächige Material kann beispielsweise aus einem Blech, einem Gewebe, einem Karton, einem Papier, einer Kunststofffolie oder einem Verbundmaterial ausgebildet sein. Denkbar wäre, dass es sich bei dem flächigen Material um einen Zettel, eine Karte, einen Schein, beispielsweise Geldschein, oder dergleichen handelt. Das flächige Material kann jegliche dem Fachmann im Zusammenhang mit der vorliegenden Erfindung als sinnvoll erscheinende Ausgestaltung aufweisen. Besonders bevorzugt ist die Vorrichtung zumindest dazu ausgebildet, ein Parkticket aufzunehmen und selbsthemmend zu halten/zu fixieren. Mittels der Vorrichtung kann das Parkticket aus zumindest einem Parkautomaten entnommen und/oder in einen Parkautomaten eingeschoben werden. Dadurch kann ein hoher Bedienkomfort bereitgestellt und für den Bediener ein erleichtertes Handhaben mit Parktickets ermöglicht werden. Insbesondere dann, wenn der Parkautomat, beispielsweise mit einer Schranke zum Ein- und/oder Ausfahren aus einem Parkplatz, von dem Bediener aus einem Fahrzeug, beispielsweise einem Auto oder Lastwagen, nicht direkt oder nur schwer erreichbar ist. Mit der Vorrichtung kann der Bediener schneller, leichter und komfortabler das flächige Material, welches im Zusammenhang mit dem Parkautomat auch neben dem Parkticket als eine Karte oder ein Geldschein ausgebildet sein kann, aus dem Parkautomat entnehmen und/oder in den Parkautomat einschieben. Denkbar wären auch jegliche anderen Anwendungen, bei denen der Bediener ein flächiges Material in einen Automaten schieben muss, wie beispielsweise bei einem Bankautomaten und/oder Kassenautomat.

Ferner wird vorgeschlagen, dass die Führungsbahn so gestaltet ist, dass die darin befindliche Kugel punktuell anliegt. Insbesondere gilt dies bei einer Querschnittsbetrachtung des Grundkörpers. Dadurch kann eine Kontaktfläche zwischen Kugel und Führungsbahn verkleinert und eine Reibungskraft verringert werden. Somit lässt sich eine Beweglichkeit der Kugel erhöhen und es kann eine effiziente Konstruktion bereitgestellt werden. Die Kugel könnte die Führungsbahn lediglich in einem Punkt lokal kontaktieren. Bevorzugt kontaktiert die Kugel die Führungsbahn an zumindest zwei Punkten. Denkbar wäre auch, dass die Kugel die Führungsbahn in zumindest drei, fünf oder mehr Punkten kontaktiert.

In einem weiteren Aspekt der Erfindung wird vorgeschlagen, dass die Führungsbahn so gestaltet ist, dass die darin befindliche Kugel linienförmig anliegt. Insbesondere gilt dies bei einer Querschnittsbetrachtung des Grundkörpers. Damit kann eine besonders gleichmässige und sichere Führung der Kugel bereitgestellt und eine Konstruktion optimiert werden. Die Oberfläche der Führungsbahn kann die Form eines Kreisbogens aufweisen. Bevorzugt entspricht ein Radius des Kreisbogens zumindest im Wesentlichen einem Radius der Kugel. Insbesondere liegt eine gesamte Kugelsegment-Oberfläche der Kugel im Abschnitt der Führungsbahn an der, bevorzugt kreisbogenförmigen, Oberfläche der Führungsbahn an. Unter «zumindest im Wesentlichen» soll in diesem Zusammenhang verstanden werden, dass eine Abweichung von einem vorgegebenen Wert und/oder einer Ausrichtung weniger als 25 %, vorzugsweise weniger als 10 % und besonders bevorzugt weniger als 5 % des vorgegebenen Werts und/oder der Ausrichtung beträgt.

Ferner wird in einem weiteren Aspekt der Erfindung vorgeschlagen, dass die Führungsbahn so gestaltet ist, dass die darin befindliche Kugel in Liniensegmenten anliegt. Insbesondere gilt dies bei einer Querschnittsbetrachtung des Grundkörpers. Hierdurch kann die Konstruktion weiter optimiert und eine bessere Stabilisierung und Halterung der Kugel bereitgestellt werden. Insbesondere ist eine Kontaktfläche der Kugel an der Führungsbahn in Liniensegmenten grösser als punktuell.

Zudem wird vorgeschlagen, dass das der Führungsbahn gegenüberliegende Gegenstück eine Fläche des Grundkörpers ist. Dadurch kann eine besonders einfache und kompakte Konstruktion bereitgestellt werden. Zudem kann eine Reibungskraft des flächigen Materials aufgrund einer grösseren Kontaktfläche mit dem Gegenstück bereitgestellt und damit wiederum eine Halterung und Fixierung des flächigen Materials optimiert werden. Insbesondere ist die Fläche durch eine Aussenoberfläche des Grundkörpers gebildet. Bevorzugt liegt in dem eingesteckten Zustand das flächige Material auf der das Gegenstück bildenden Fläche des Grundkörpers zumindest abschnittsweise oder vollständig auf.

In einem weiteren Aspekt der Erfindung, wird vorgeschlagen, dass das der Führungsbahn gegenüberliegende Gegenstück ein zu dem Klemmmechanismus symmetrisch angeordneter weiterer Klemmmechanismus ist. Dadurch kann eine Konstruktion weiter optimiert werden, und zwar dahingehend, dass eine besonders starke selbsthemmende Fixierung/Festhalten des flächigen Materials bereitgestellt werden kann. Insbesondere weist der weitere Klemmmechanismus analoge Merkmale wie der bereits zu vor genannte Klemmmechanismus auf. In Einführungsrichtung des flächigen Materials auf einen Querschnitt der Vorrichtung betrachtet, können der weitere Klemmmechanismus und der Klemmmechanismus übereinander angeordnet sein. Insbesondere ist der weitere Klemmmechanismus spiegelsymmetrisch zu dem Klemmmechanismus angeordnet, und zwar betrachtet zu einer Ebene, welche durch das flächige Material im eingesetzten Zustand in der Vorrichtung gebildet ist. Das flächige Material kann in dem eingesetzten Zustand zumindest zwischen der Kugel und zumindest einer weiteren Kugel des weiteren Klemmmechanismus gehalten und angeordnet sein.

In einem weiteren Aspekt der Erfindung, wird vorgeschlagen, dass diese zumindest zwei nebeneinanderliegende Klemmmechanismen aufweist. Damit kann eine Konstruktion weiter verbessert und ein Bedienerkomfort gesteigert werden, und zwar dahingehend, dass mittels einer derartigen Vorrichtung grössere flächige Materialien aufgenommen und selbsthemmend gehalten werden können. Die zumindest zwei Klemmmechanismen können parallel zueinander angeordnet sein. Bevorzugt haben beide Klemmmechanismen dasselbe Gegenstück.

Die Vorrichtung könnte noch weitere, bevorzugt beliebig viele, beispielsweise drei, vier oder sechs Klemmmechanismen aufweisen. Insbesondere in Abhängigkeit von einer Grösse und/oder Form von aufzunehmenden flächigen Materialien kann eine Anzahl von Klemmmechanismen der Vorrichtung variieren und gerade bei grösseren flächigen Materialien können mehrere Klemmmechanismen Teil der Vorrichtung sein. Denkbar wäre, dass die Vorrichtung zumindest vier Klemmmechanismen aufweist, wobei jeweils zwei nebeneinander angeordnet sind. Die Klemmmechanismen könnten in einem Viereck, bevorzugt in einem Quadrat, zueinander angeordnet sein. Jeweils zwei Klemmmechanismen könnten den jeweils zwei anderen Klemmmechanismen das Gegenstück bilden. Das flächige Material könnte in dem eingesetzten Zustand zwischen den vier Klemmmechanismen angeordnet und gehalten sein, wobei jeweils zwei Klemmmechanismen auf je einer Seite des flächigen Materials positioniert sind.

Wenn das federnde Element eine Stahlfeder ist, kann eine besonders stabile und effiziente Konstruktion bereitgestellt werden. Zudem können Herstellungskosten und ein Herstellungsaufwand reduziert und auf gängige Elemente zur Federung zurückgegriffen werden.

Alternativ wird vorgeschlagen, dass das federnde Element ein elastisches Kunststoffelement ist. Hierdurch kann vorteilhaft eine besonders kosteneffiziente Herstellung ermöglicht werden.

Ausserdem wird vorgeschlagen, dass die in der jeweiligen Führungsbahn befindliche Kugel aus Edelstahl besteht. Dadurch kann eine besonders stabiler Klemmmechanismus bereitgestellt und eine Konstruktion weiter verbessert werden. Alternativ kann die Kugel auch aus jedem anderen dem Fachmann als sinnvoll erscheinenden Material, wie beispielsweise einem Kunststoff, einem Mineral, einem anderen Metall, wie Aluminium, und/oder einer Metalllegierung und/oder einem Verbundmaterial ausgebildet sein.

Um ein besonders leichtes Einführen sowie ein schnelles, knickfreies und effizientes Aufnehmen des flächigen Materials zu ermöglichen, wird vorgeschlagen, dass der Grundkörper eine Zentrierhilfe aufweist. Dadurch kann wiederum ein Bedienkomfort gesteigert und eine Handhabung erleichtert werden.

Die Zentrierhilfe kann zu einem schnellen, knickfreien und leichten Einführen des flächigen Materials in den Haltebereich dienen. Bevorzugt ist die Zentrierhilfe als eine Art Schräge oder Rampe ausgebildet, entlang welcher das flächige Material bei der Einführung entlang der Einführungsrichtung in die Vorrichtung entlang gleiten und/oder rutschen kann, vorzugsweise um knickfrei in den Haltebereich zu gelangen. Insbesondere bildet zumindest eine abgeschrägte Formgebung des Grundkörpers die Zentrierhilfe aus. Die Zentrierhilfe kann aus zumindest einem abgeschrägten Abschnitt des Grundkörpers bestehen. Bevorzugt weist der Grundkörper zumindest zwei abgeschrägte Abschnitte auf, welche die Zentrierhilfe bilden. Diese beiden abgeschrägten Abschnitte liegen vorteilhaft gegenüberliegend zueinander, wobei sich insbesondere ein Abstand zwischen den Abschnitten entlang der Längserstreckung des Grundkörpers betrachtet von einem äusseren Ende des Grundkörpers zu dem Haltebereich hin verkleinert.

Ferner geht die Erfindung aus von einem System mit zumindest einer Vorrichtung, insbesondere zumindest der zuvor genannten Vorrichtung, und zumindest einer Griffeinheit, an welcher zumindest die Vorrichtung angeordnet ist. Dadurch kann neben der Steigerung eines Bedienerkomforts, eine Konstruktion weiter optimiert und handhabungsfreundlicher gestaltet werden. Mittels der Griffeinheit des Systems kann ein besonders bedienerfreundliches Greifen, Halten, Führen, Bedienen und Handhaben der Vorrichtung ermöglicht werden.

Insbesondere ist die Griffeinheit eine Einheit zum Halten und Greifen für den Bediener. Zur Verwendung und einem Einsatz der Vorrichtung kann der Bediener die Griffeinheit greifen. Die Griffeinheit könnte eine jegliche für den Fachmann im Zusammenhang mit der vorliegenden Erfindung als sinnvoll erscheinende Form aufweisen. Die Griffeinheit könnte beispielsweise eine eckige, runde, gebogene, gerade und/oder ovale Form aufweisen. Bevorzugt weist die Griffeinheit einen runden oder eckigen Stab auf. Eine Längserstreckung des Stabs kann zumindest doppelt, vorteilhaft zumindest dreimal, vorzugsweise zumindest viermal, und besonders bevorzugt zumindest fünfmal, so gross sein, wie eine Längserstreckung des Grundkörpers. Unter einer «Längserstreckung» eines Objekts soll in diesem Zusammenhang eine Erstreckung des Objekts in einer Längserstreckungsrichtung des Objekts verstanden werden Die «Längserstreckungsrichtung» des Objekts ist eine Richtung, welche parallel zu einer längsten Kante und/oder Seite eines kleinsten das Objekt gerade noch umschliessenden, insbesondere gedachten, Quaders ausgerichtet ist und/oder verläuft. Mit einer derart langen Griffeinheit kann der Bediener auch weit entfernte Automaten, insbesondere Parkautomaten, bedienen und flächige Materialien aus dem Automaten entnehmen und/oder einschieben.

Die Vorrichtung und die Griffeinheit könnten nach der Herstellung fest miteinander verbunden sein, insbesondere für den Bediener unlösbar/irreversibel lösbar, beispielsweise mittels einer Kraft- und/oder Formschlussverbindung, wie möglicherweise einer Rastverbindung und/oder Steckverbindung und/oder Drehverbindung und/oder Schraubverbindung und/oder Klemmverbindung und/oder Klettverbindung, und/oder mittels einer stoffschlüssigen Verbindung, beispielsweise einer Klebeverbindung und/oder Schweissverbindung. Die Griffeinheit kann aus einem Metall, wie Edelstahl, einem Mineral, wie Glas oder Holz, einem Kunststoff und/oder einem Verbundmaterial ausgebildet sein.

Bei dem System kann es sich auch um ein Baukastensystem handeln, mit zumindest der Vorrichtung der Griffeinheit, welche durch den Bediener, bevorzugt reversibel, zusammensetzbar ist. Die Vorrichtung könnte lösbar an der Griffeinheit angeordnet sein und bei Bedarf durch den Bediener an der Griffeinheit montiert und/oder von der Griffeinheit entfernt werden. Denkbar wäre, dass das Baukastensystem mehrere Griffeinheiten umfasst, welche unterschiedliche Längserstreckungen zueinander aufweisen. Der Bediener könnte je nach Bedarf, die Griffeinheiten untereinander wechseln und an der Vorrichtung montieren. Die Anordnung der Griffeinheit(en) an der Vorrichtung könnte(n) mittels einer Kraft- und/oder Formschlussverbindung, wie beispielsweise einer Rastverbindung und/oder Steckverbindung und/oder Drehverbindung und/oder Schraubverbindung und/oder Klemmverbindung und/oder Klettverbindung, erfolgen.

Zudem wird vorgeschlagen, dass das System auf einer der Vorrichtung gegenüberliegenden Seite an der Griffeinheit eine weitere Vorrichtung zur Aufnahme und zum Festhalten von flächigen Materialien angeordnet ist. Dadurch kann eine Konstruktion weiter verbessert und ein Bedienerkomfort gesteigert werden, da einem Bediener somit zumindest zwei Vorrichtungen zur Aufnahme von flächigen Materialien bereitstehen.

Die weitere Vorrichtung könnte die gleiche Ausgestaltung aufweisen, wie die bereits genannte Vorrichtung. Es wird jedoch vorgeschlagen, dass die weitere Vorrichtung einen weiteren Grundkörper mit zumindest einer Nut zur Aufnahme und zum Festhalten von flächigen Materialien aufweist. Insbesondere ist die Nut in das Material des weiteren Grundkörpers eingelassen. Vorteilhaft handelt es sich bei der Nut um einen Schlitz im weiteren Grundkörper.

Um eine besonders schnelles Aufnehmen und ein stabiles Festhalten von flächigen Materialien bereitzustellen, wird vorgeschlagen, dass die Nut entlang einer Längsachse des weiteren Grundkörpers zumindest abschnittsweise wellenförmig ausgebildet ist. Damit kann zudem eine sehr einfache und bedienerfreundliche Konstruktion bereitgestellt werden. Die Nut kann sich über zumindest 10%, vorteilhaft zumindest 20%, bevorzugt zumindest 50%, und über insbesondere höchstens 80%, besonders bevorzugt höchstens 90%, einer Längserstreckung des weiteren Grundkörpers entlang seiner Längsachse erstrecken. Der Bediener kann in gleicher Richtung, wie das flächige Material in die weitere Vorrichtung eingeführt wurde, dieses wieder aus der weiteren Vorrichtung herausziehen. Dadurch können ein besonders schnelles und einfach Lösen und Herausnehmen des flächigen Materials aus der weiteren Vorrichtung bereitgestellt werden.

Die Vorrichtung und das System sollen hierbei nicht auf die oben beschriebene Anwendung und Ausführungsform beschränkt sein. Insbesondere kann/können die Vorrichtung und/oder das System zu einer Erfüllung einer hierin beschriebenen Funktionsweise eine von einer hierin genannten Anzahl von einzelnen Elementen, Bauteilen und/oder Einheiten abweichende Anzahl aufweisen. Zudem sollen bei den in diesem Dokument angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind mehrere Ausführungsbeispiele der Erfindung dargestellt. Die Zeichnungen, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: ein System mit einer Vorrichtung zur Aufnahme und zum selbsthemmenden Festhalten von flächigen Materialien, mit einer Griffeinheit und mit zumindest einer weiteren Vorrichtung, welche an einer gegenüberliegenden Seite an der Griffeinheit angeordnet ist,
- Fig. 2: das System gemäss Figur 1 in einer Seitenansicht,
- Fig. 3: eine Detailansicht der Vorrichtung mit einem Grundkörper,
- Fig. 4: eine Schnittdarstellung der Vorrichtung entlang einer Längsachse des Grundkörpers zur Darstellung eines selbsthemmenden Klemmmechanismus der Vorrichtung, wobei der Klemmmechanismus zumindest eine Kugel und zumindest ein federndes Element aufweist,
- Fig. 5: eine weitere Schnittdarstellung der Vorrichtung entlang der Längsachse des Grundkörpers mit eingeführtem flächigem Material, wobei sich die Kugel in einer Halteposition zur Fixierung des flächigen Materials befindet,
- Fig. 6: einen Einführschritt des flächigen Materials in die Vorrichtung entlang einer Einführungsrichtung,
- Fig. 7: einen eingesteckten Zustand des flächigen Materials in der Vorrichtung,
- Fig. 8: einen Entnahmeschritt des flächigen Materials aus die Vorrichtung entlang einer Entnahmerichtung,
- Fig. 9: einen Querschnitt durch die Vorrichtung, zur Darstellung einer Führungsbahn in dem Grundkörper, an welcher vorliegend die Kugel punktuell anliegt,
- Fig. 10: einen Querschnitt durch eine Vorrichtung in einer alternativen Ausgestaltung, wobei eine Führungsbahn so gestaltet ist, dass eine darin befindliche Kugel der Vorrichtung linienförmig anliegt,
- Fig. 11: einen Querschnitt durch eine Vorrichtung in einer weiteren alternativen Ausgestaltung, wobei eine Führungsbahn so gestaltet ist, dass eine darin befindliche Kugel der Vorrichtung in Liniensegmenten anliegt,
- Fig. 12: einen Längsschnitt durch eine Vorrichtung in einer weiteren alternativen Ausgestaltung, wobei diese Vorrichtung zumindest zwei selbsthemmende Klemmmechanismen aufweist, welche gegenüberliegend zueinander angeordnet sind,
- Fig. 13: einen Querschnitt durch die Vorrichtung gemäss Figur 12,
- Fig. 14: einen Querschnitt durch eine Vorrichtung in einer weiteren alternativen Ausgestaltung, wobei diese Vorrichtung zumindest zwei selbsthemmende Klemmmechanismen aufweist, welche nebeneinander angeordnet sind,
- Fig. 15: einen Querschnitt durch eine Vorrichtung in einer weiteren alternativen Ausgestaltung, wobei diese Vorrichtung zumindest vier selbsthemmende Klemmmechanismen aufweist und jeweils zwei dieser Klemmmechanismen nebeneinander und jeweils zwei übereinander angeordnet sind.

### Beschreibung der Ausführungsbeispiele

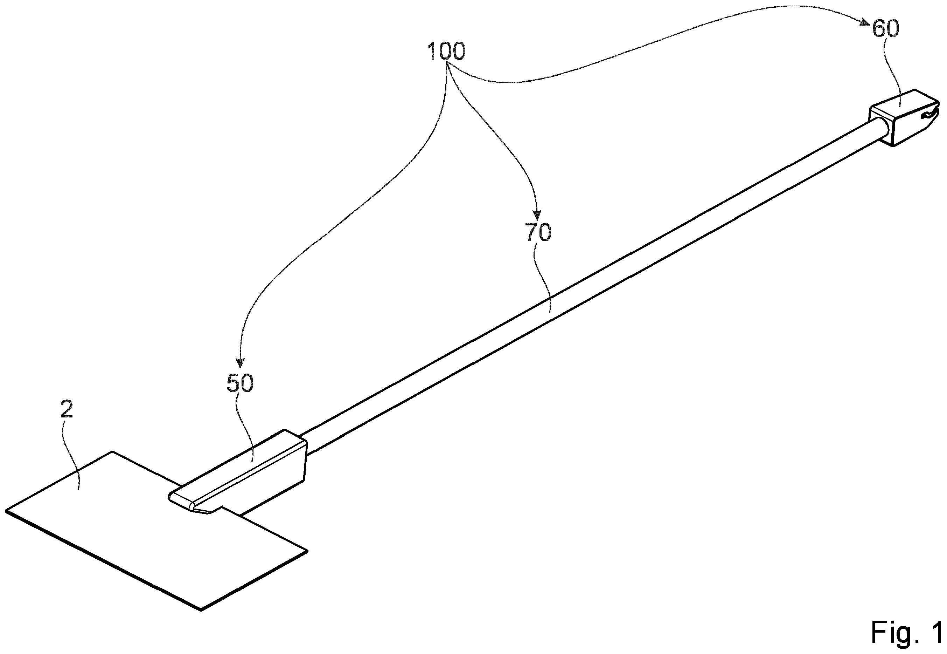

Figur 1 zeigt ein System 100 mit zumindest einer Vorrichtung 50 zur Aufnahme und zum selbsthemmenden Festhalten von flächigen Materialien 2. Das flächige Material 2 ist beispielsweise ein Blech, ein Gewebe, ein Karton, ein Papier oder eine Kunststofffolie. In dieser beispielhaften Ausgestaltung ist das flächige Material 2 ein Parkticket, welches aus einem Parkautomat entnehmbar und/oder in ein Parkautomat einschiebbar ist. Das flächige Material 2 könnte in diesem Zusammenhang jedoch auch ein Geldschein oder eine Karte oder ein anderer dem Fachmann als sinnvoll erscheinender Gegenstand sein.

Das System 100 weist eine Griffeinheit 70 auf, an welcher zumindest die Vorrichtung 50 angeordnet ist. Vorliegend ist die Griffeinheit 70 als ein runder gerader Stab ausgebildet. Alternativ kann die Griffeinheit 70 auch gebogen oder eckig sein. Die Griffeinheit 70 ermöglicht ein einfaches und komfortables Halten, Führen, Greifen und/oder Benutzen der Vorrichtung 50. Zur Verwendung und einem Einsatz der Vorrichtung greift ein Bediener die Griffeinheit 70.

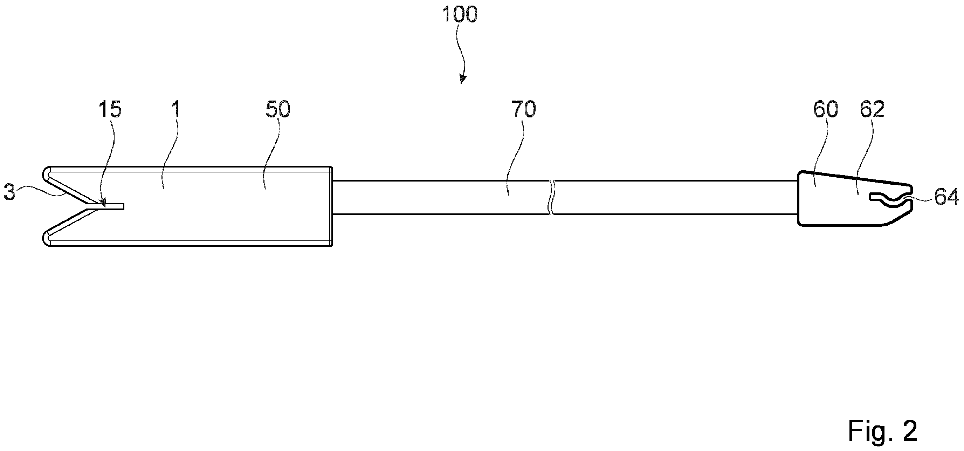

Ferner weist das System 100 zumindest eine weitere Vorrichtung 60 zur Aufnahme und zum Festhalten von flächigen Materialien 2 auf, welche auf einer der Vorrichtung 50 gegenüberliegenden Seite an der Griffeinheit 70 angeordnet ist. Die weitere Vorrichtung 60 könnte die gleiche Ausgestaltung aufweisen, wie die bereits genannte Vorrichtung 50. Vorliegend weist die weitere Vorrichtung 60 einen weiteren Grundkörper 62 mit zumindest einer Nut 64 zur Aufnahme und zum selbsthemmenden Festhalten von flächigen Materialien 2 auf. Figur 2, welche eine Seitenansicht des Systems 100 zeigt, verdeutlicht, dass die Nut 64 entlang einer Längsachse des weiteren Grundkörpers 62 zumindest abschnittsweise wellenförmig ausgebildet ist. Die Nut 64 erstreckt sich in dieser beispielhaften Ausgestaltung über zumindest 20% einer Längserstreckung des weiteren Grundkörpers 62 entlang seiner Längsachse. Die weitere Vorrichtung 60 ist dazu ausgebildet, dass flächige Material 2 zu halten und vor einem Herausfallen und/oder Herausrutschen zu fixieren (nicht dargestellt). Der Bediener kann in gleicher Richtung, wie das flächige Material 2 in die weitere Vorrichtung 60 einführbar ist, dieses wieder aus der weiteren Vorrichtung 60 herausziehen. Dadurch können ein besonders schnelles und einfach Lösen und Herausnehmen des flächigen Materials 2 aus der weiteren Vorrichtung 60 bereitgestellt werden.

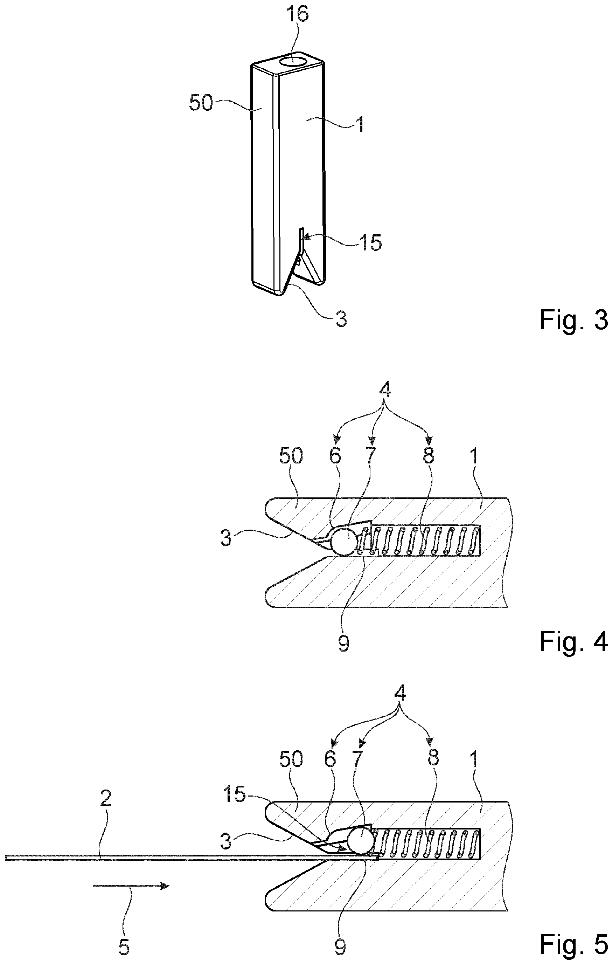

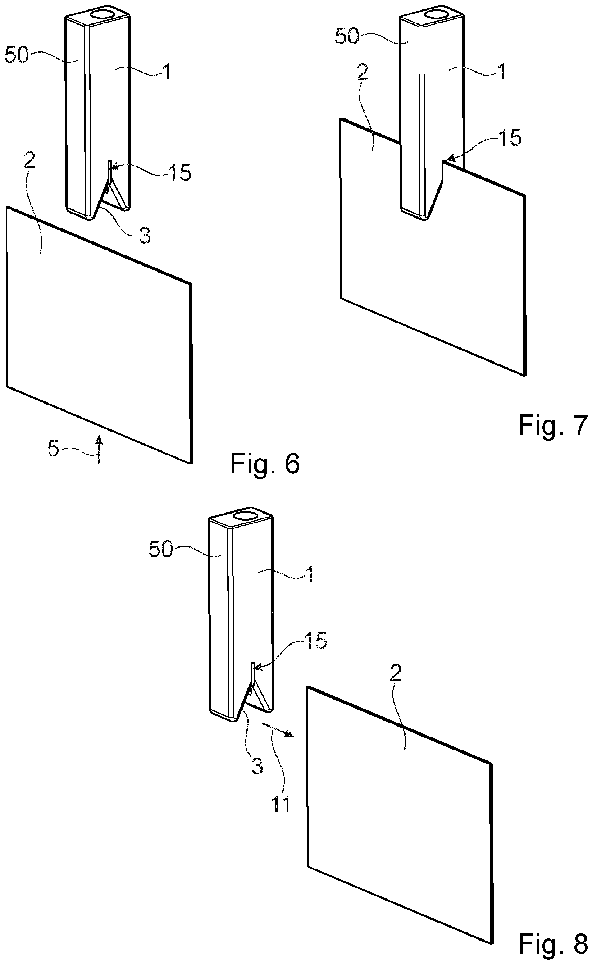

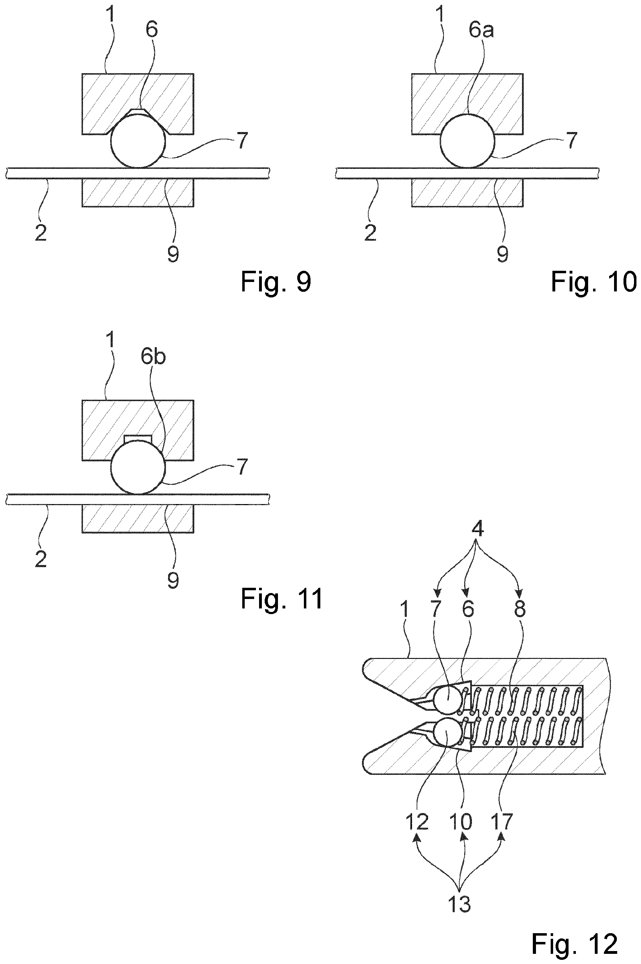

Nachfolgend verdeutlichen die Figuren 3, 4, 5, und 9 den weiteren Aufbau und die Ausgestaltung der Vorrichtung 50, wobei die Figuren 5 und 9 einen Zustand mit eingeführtem flächigen Material 2 zeigen. In den Figuren 6 bis 8 ist ein Einführen und Entfernen des flächigen Materials 2 in und aus der Vorrichtung 50 dargestellt.

Die Vorrichtung 50 weist einen Grundkörper 1 mit mindestens einem integrierten Klemmmechanismus 4 auf, welcher aus einer zur Längsachse des Grundkörpers 1 winkelig eingelassenen Führungsbahn 6 mit jeweils einer darin geführten Kugel 7 besteht, welche durch mindestens ein federndes Element 8 zwischen der Führungsbahn 6 und einem Gegenstück vorgespannt ist (vgl. Figuren 3, 4, 5 und 9). Das federnde Element 8 ist in dieser Ausgestaltung eine Stahlfeder. Alternativ kann das federnde Element 8 auch ein elastisches Kunststoffelement sein. Ferner ist die Kugel 7 aus Edelstahl ausgebildet. Der Grundkörper 1 weist einen Haltebereich 15 auf, in welchen das flächige Material 2 einführbar und in welchem das flächige Material 2 in einem eingesteckten Zustand (vgl. Figuren 5 und 7) selbsthemmend fixiert ist. Der Haltebereich 15 ist durch den Klemmmechanismus 4 und das Gegenstück definiert.

Vorliegend ist der Grundkörper 1 einteilig ausgebildet. Zur Einführung und Anordnung der Kugel 7 und des federnden Elements 8 in dem Grundkörper 1, weist der Grundkörper 1 eine Öffnung 16 auf. Die Öffnung 16 dient vorliegend auch zu einem Anordnen der Griffeinheit 70 an der Vorrichtung 50. In dieser Ausgestaltung ist die Griffeinheit 70 in die Vorrichtung 70 einsteckbar und kann zusätzlich verklebt und verschweisst sein. Die Führungsbahn 6 ist vorliegend winkelig ausgestaltet und durch eine Aussenkontur des Grundkörpers 1 gebildet. Die Führungsbahn 6 begrenzt den Haltebereich 15 zumindest abschnittsweise. Das der Führungsbahn 6 gegenüberliegende Gegenstück ist in diesem Ausführungsbeispiel eine Fläche 9 des Grundkörpers 1 (vgl. Figur 4, 5 und 9). Die Fläche 9 ist eine Aussenoberfläche des Grundkörpers 1. Gemäss den Figuren 5 und 9 liegt das flächige Material 2 in dem eingesteckten Zustand auf der das Gegenstück bildenden Fläche 9 des Grundkörpers 1 auf.

Ferner ist die die Führungsbahn 6 so gestaltet, dass die darin befindliche Kugel 7 punktuell anliegt. Dies gilt gerade bei einer Querschnittsbetrachtung des Grundkörpers 1, wie sie in Figur 9 dargestellt ist. Die Kugel 7 kontaktiert die Führungsbahn 6 vorliegend in zumindest zwei Punkten. Dadurch kann eine Kontaktfläche zwischen Kugel und Führungsbahn verkleinert und eine Reibungskraft verringert werden. Die Kugel 7 ist rotationssymmetrisch frei beweglich in dem Haltebereich 15 gelagert.

Ein Kraftaufwand zum Einführen des flächigen Materials 2 in die Vorrichtung 50 kann mit der vorliegenden Erfindung gering gehalten werden. Zudem können ein Einknicken und/oder Verbiegen und/oder Verknicken und/oder Einreissen oder andere Beschädigungen des flächigen Materials 2 bei Einführung in die Vorrichtung 50 reduziert, bevorzugt vollständig verhindert werden. Das flächige Material 2 ist entlang einer Einführrichtung 5 in die Vorrichtung 50 einführbar (vgl. Figuren 5 und 6). Um ein besonders leichtes sowie schnelles, knickfreies und effizientes Einführen des flächigen Materials 2 zu ermöglichen, weist der Grundkörper 1 eine Zentrierhilfe 3 auf. Vorliegend ist die Zentrierhilfe 3 als eine Art Schräge oder Rampe ausgebildet, entlang welcher das flächige Material 2 bei der Einführung entlang der Einführungsrichtung 5 in die Vorrichtung 50 entlang gleitet und/oder rutscht (vgl. Figuren 5 und 6).

Bei Einführung des flächigen Materials 2 in die Vorrichtung 50 wird die Kugel 7 in der Führungsbahn 6 in Einführrichtung 5 gedrückt, wobei notwendiger Platz zum Einführen des flächigen Materials 2 über den Winkel der Führungsbahn 6 zur Längsachse des Grundkörpers freigegeben wird. Dies geschieht durch ein leichtes Verschieben der Kugel 7 in Einführrichtung 5, wobei die Kugel dabei auch gleichzeitig eine Rollbewegung in der Führungsbahn 6 ausführt, was das Einführen des flächigen Materials 2 zusätzlich erleichtert, respektive die dafür benötigte Kraft minimiert.

Nach dem Einführen ist das flächige Material 2, wie in den Figuren 1, 5 und 7, selbsthemmend gegen ein Entnehmen oder Herausfallen entgegen der Einführrichtung 5 festgehalten und fixiert. Die Kugel 7 ist mit dem federnden Element 8 entgegen der Einführrichtung 5 vorgespannt, sodass die Kugel 7 stets spielfrei in der Führungsbahn 6 gehalten ist und durch die Rückstellkraft des federnden Elements 8 einen Druck gegengegen der Einführrichtung 5 ausübt. Wie in Figur 5 gezeigt, befindet sich die Kugel 7 in dem eingesteckten Zustand des flächigen Materials 2 in einer Halteposition zur Fixierung des flächigen Materials 2. Der durch eine der Einführrichtung 5 entgegengesetzten Bewegung des flächigen Materials 2 entstehende, selbsthemmende Effekt, ist durch den Winkel der Führungsbahn 6 zur Längsachse des Grundkörpers 1 gegeben. Sobald das eingeführte flächige Material 2 entgegen der Einführrichtung 5 bewegt wird, entsteht ein Selbsthemmungseffekt, wobei die Kugel 7 durch Federkraft und durch Reibung am flächigen Material 2 in der Führungsbahn 6 entgegen der Einführrichtung 5 zurückbewegt wird. Dadurch ist das flächige Material 2 zwischen der Kugel 7 und dem Gegenstück 6 eingeklemmt und festgehalten.

Eine Entnahme des flächigen Materials 2 erfolgt durch seitliches Herausziehen aus der Vorrichtung 50 in Entnahmerichtung 11 (vgl. Figur 8). Die Entnahmerichtung 11 verläuft senkrecht zur Einführrichtung 5. Durch eine seitliche Rollbewegung der Kugel 7 in der Führungsbahn 6 wird der selbsthemmende Effekt und die Klemmung der Vorrichtung 50 dabei gelöst und das flächige Material 2 freigegeben. Dadurch ist gewährleistet, dass das flächige Material 2 mit geringem Kraftaufwand und beschädigungsfrei aus der Vorrichtung 50 entnommen werden kann.

In den Figuren 10 bis 15 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des ersten Ausführungsbeispiels der Figuren 1 bis 9 verwiesen werden kann.

Figur 10 zeigt einen Querschnitt durch eine Vorrichtung in einer alternativen Ausgestaltung, wobei eine Führungsbahn 6a so gestaltet ist, dass eine darin befindliche Kugel 7 der Vorrichtung linienförmig anliegt. Die Führungsbahn 6a weist eine kreisbogenförmige Kontaktfläche zur Kugel 7 auf. Vorliegend entspricht ein Radius des Kreisbogens der Führungsbahn 6a zumindest im Wesentlichen einem Radius der Kugel 7. In dieser Ausgestaltung liegt im Abschnitt der Führungsbahn 6a eine gesamte Kugelsegment-Oberfläche der Kugel 7 an der kreisbogenförmigen Oberfläche der Führungsbahn 6a an.

Ferner zeigt die Figur 11 einen Querschnitt durch eine Vorrichtung in einer alternativen Ausgestaltung, wobei eine Führungsbahn 6b so gestaltet ist, dass eine darin befindliche Kugel 7 der Vorrichtung in Liniensegmenten anliegt. Damit ist eine Kontaktfläche der Kugel 7 an der Führungsbahn 6b in Liniensegmenten grösser als punktuell.

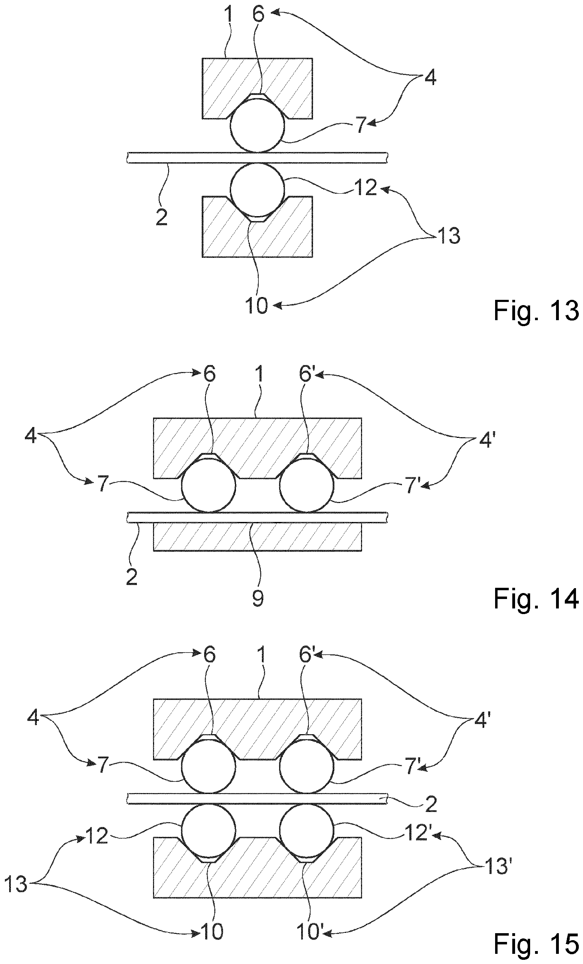

In Figur 12 ist ein einen Längsschnitt durch eine Vorrichtung in einer weiteren alternativen Ausgestaltung gezeigt, wobei diese Vorrichtung zumindest zwei selbsthemmende Klemmmechanismen 4, 13 aufweist, welche gegenüberliegend zueinander angeordnet sind. Die Figur 13 verdeutlich diese Anordnung der beiden Klemmmechanismen 4, 13 zueinander in einer Querschnittsdarstellung der Vorrichtung gemäss Figur 12. Die Vorrichtung weist den bereits im ersten Ausführungsbeispiel genannten Klemmmechanismus 4 mit zumindest der Kugel 7 und zumindest der Führungsbahn 6 auf. Zusätzlich weist die Vorrichtung einen weiteren Klemmmechanismus 13 mit zumindest einer weiteren Kugel 12 und zumindest einer weiteren Führungsbahn 10 auf. Vorliegen sind der Klemmmechanismus 4 und der Klemmmechanismus 13 identisch zueinander ausgebildet, wobei gerade auch die Führungsbahn 6 und die Führungsbahn 10 identische Formgebungen aufweisen. Alternativ wäre auch denkbar, dass zumindest die Führungsbahnen 6, 10 unterschiedliche Formen mit verschiedenen Kontaktflächen zu den Kugeln 7, 12 aufweisen (wie beispielsweise es die Ausgestaltungen der Führungsbahn 6, 6a, 6b in den Figuren 9 bis 11 zeigt). Entscheidend ist, dass das der Führungsbahn 6 gegenüberliegende Gegenstück in dieser Ausgestaltung der zu dem Klemmmechanismus 4 symmetrisch angeordnete weitere Klemmmechanismus 13 ist. Das flächige Material 2 ist in dem eingesetzten Zustand zumindest der Kugel 7 und zumindest einer weiteren Kugel 12 des weiteren Klemmmechanismus 13 gehalten und angeordnet.

Auch die in Figur 14 dargestellte Vorrichtung in einer weiteren alternativen Ausgestaltung zeigt, eine Vorrichtung mit zumindest zwei Klemmmechanismen 4, 4'. Diese beiden Klemmmechanismen 4, 4' sind vorliegend nebeneinander angeordnet. Ein Gegenstück der Vorrichtung für beide Klemmmechanismen 4, 4' ist eine Fläche 9 eines Grundkörpers 1 der Vorrichtung.

Figur 15 verdeutlicht, dass eine Ausgestaltung der Erfindung nicht auf zwei Klemmmechanismen beschränkt ist. Vorliegend weist eine Vorrichtung in einer weiteren alternativen Ausgestaltung zumindest vier Klemmmechanismen 4,4', 13, 13' auf, wobei jeweils zwei Klemmmechanismen 4,4', 13, 13' nebeneinander liegen. In Einführungsrichtung eines flächigen Materials auf einen Querschnitt der Vorrichtung gemäss Figur 15 betrachtet, ist der Klemmmechanismus 4 neben dem Klemmmechanismus 4' und oberhalb des Klemmmechanismus 13 angeordnet. Der Klemmmechanismus 13' ist wiederum neben dem Klemmmechanismus 13 und unterhalb des Klemmmechanismus 4' angeordnet. Somit sind die vier Klemmmechanismen 4,4', 13, 13' in einem Viereck, und zwar vorliegend einem Quadrat angeordnet. Damit kann eine besonders starker und stabiler Klemmmechanismus und ein selbsthemmendes Festhalten des flächigen Materials bereitgestellt werden.

### Bezugszeichen

- 1: Grundkörper
- 2: Material
- 3: Zentrierhilfe
- 4: Klemmmechanismus
- 5: Einführrichtung
- 6: Führungsbahn
- 7: Kugel
- 8: federndes Element
- 9: Fläche
- 10: Führungsbahn
- 11: Entnahmerichtung
- 12: weitere Kugel
- 13: weiterer Klemmmechanismus
- 15: Haltebereich
- 16: Öffnung
- 17: weiteres federndes Element
- 50: Vorrichtung
- 60: weitere Vorrichtung
- 62: weiterer Grundkörper
- 64: Nut
- 70: Griffeinheit
- 100: System

## Patentansprüche

1. Vorrichtung (50) zur Aufnahme und zum selbsthemmenden Festhalten von flächigen Materialien (2), wie Blech, Gewebe, Karton, Papier oder Kunststofffolie, **gekennzeichnet durch** einen Grundkörper (1) mit mindestens einem integrierten Klemmmechanismus (4,13), welcher aus einer zur Längsachse des Grundkörpers (1) winklig eingelassenen Führungsbahn (6,10) mit jeweils einer darin geführten Kugel (7,12) besteht, welche durch mindestens ein federndes Element (8) zwischen der Führungsbahn (6,10) und einem Gegenstück vorgespannt ist.

2. Vorrichtung (50) nach Anspruch 1, **dadurch gekennzeichnet, dass** die Führungsbahn (6) so gestaltet ist, dass die darin befindliche Kugel (7, 12) punktuell anliegt.

3. Vorrichtung (50) nach Anspruch 1, **dadurch gekennzeichnet, dass** die Führungsbahn (6a) so gestaltet ist, dass die darin befindliche Kugel (7) linienförmig anliegt.

4. Vorrichtung (50) nach Anspruch 1, **dadurch gekennzeichnet, dass** die Führungsbahn (6b) so gestaltet ist, dass die darin befindliche Kugel (7) in Liniensegmenten anliegt.

5. Vorrichtung (50) nach einem der vorhergehenden Ansprüche, **dadurch gekennzeichnet, dass** das der Führungsbahn (6) gegenüberliegende Gegenstück eine Fläche (9) des Grundkörpers (1) ist.

6. Vorrichtung (50) nach einem der Ansprüche 1 bis 4, **dadurch gekennzeichnet, dass** das der Führungsbahn (6) gegenüberliegende Gegenstück ein zu dem Klemmmechanismus (4) symmetrisch angeordneter weiterer Klemmmechanismus (13) ist.

7. Vorrichtung (50) nach einem der vorhergehenden Ansprüche, **dadurch gekennzeichnet, dass** diese zumindest zwei nebeneinanderliegende Klemmmechanismen (4,4', 13, 13') aufweist.

8. Vorrichtung (50) nach einem der vorhergehenden Ansprüche, **dadurch gekennzeichnet, dass** das federnde Element (8) eine Stahlfeder ist.

9. Vorrichtung (50) nach einem der Ansprüche 1 bis 7, **dadurch gekennzeichnet, dass** das federnde Element (8) ein elastisches Kunststoffelement ist.

10. Vorrichtung (50) nach einem der vorhergehenden Ansprüche, **dadurch gekennzeichnet, dass** die in der jeweiligen Führungsbahn (6) befindliche Kugel (7, 12) aus Edelstahl besteht.

11. Vorrichtung nach einem der vorhergehenden Ansprüche, **dadurch gekennzeichnet, dass** der Grundkörper (1) eine Zentrierhilfe (3) aufweist.

12. System (100) mit zumindest einer Vorrichtung (50) nach einem der vorhergehenden Ansprüche und zumindest einer Griffeinheit (70), an welcher zumindest die Vorrichtung (50) angeordnet ist.

13. System (100) nach Anspruch 12, **dadurch gekennzeichnet, dass** auf einer der Vorrichtung (50) gegenüberliegenden Seite an der Griffeinheit (70) eine weitere Vorrichtung (60) zur Aufnahme und zum Festhalten von flächigen Materialien (2) angeordnet ist.

14. System (100) nach Anspruch 13, **dadurch gekennzeichnet, dass** die weitere Vorrichtung (60) einen weiteren Grundkörper (62) mit zumindest einer Nut (64) zur Aufnahme und zum Festhalten von flächigen Materialien (2) aufweist.

15. System (100) nach Anspruch 14, **dadurch gekennzeichnet, dass** die Nut (64) entlang einer Längsachse des weiteren Grundkörpers (62) zumindest abschnittsweise wellenförmig ausgebildet ist.
